# EUROPEAN PATENT APPLICATION

(11) **EP 3 779 910 A1**
(43) Date of publication of application: **17.02.2021**
(21) Application number: 19777616.4
(22) Date of filing: 08.02.2019
(51) Int. Cl.: G08B 17/107, G01N 21/53

(54) **SMOKE DETECTION SYSTEM, SMOKE DETECTION METHOD, AND PROGRAM**

(30) Priority: 26.03.2018 JP 2018058729
(71) Applicant: Panasonic Intellectual Property Management Co., Ltd., Osaka-shi, Osaka 540-6207 (JP)
(72) Inventor: UMEMURA, Takuya, Osaka-shi, Osaka 540-6207 (JP); HASHIMOTO, Yusuke, Osaka-shi, Osaka 540-6207 (JP); SAKAMOTO, Koji, Osaka-shi, Osaka 540-6207 (JP)
(74) Representative: Appelt, Christian W.
(86) International application number: PCT/JP2019/004609
(87) International publication number: WO 2019/187697

(57) **Abstract**

A smoke detection system, a smoke detection method, and a program are provided which are configured to suppress steam from being erroneously detected as smoke. A smoke detection system (200) is configured to detect smoke. The smoke detection system (200) includes an estimation unit (235). The estimation unit (235) is configured to estimate a state of a gas based on a change temperature which is a temporal change of a temperature of the gas.

## Description

### Technical Field

The present disclosure relates generally to smoke detection systems, smoke detection methods, and programs and specifically, to a smoke detection system, a smoke detection method, and a program which are configured to detect smoke by receiving, by a light receiving element, output light which is output from a light emitting element and which is scattered by the smoke flowing into a detection space.

### Background Art

A smoke detector is known which is configured to detect smoke entering a detection space (smoke-sensitive area) by irradiating the smoke with light from a light emitting element (light projecting element) and receiving light scattered by the smoke with a light receiving element (for example, Patent Literature 1).

The smoke detector described in Patent Literature 1 allows smoke to flow to a detection area through a smoke inflow path formed as a gap between a plurality of labyrinth walls into a detection space surrounded by the labyrinth walls. Moreover, the labyrinth walls have an outside light shielding function of preventing outside light from entering through the smoke inflow path so that the outside light does not make a smoke sensing function unreliable. In Patent Literature 1, a smoke sensing element in which the light emitting element and the light receiving element are accommodated is substantially circularly shaped. Moreover, in Patent Literature 1, the detection space is enlarged by making rear portions (i.e., ends on an opposite side from the detection space) of the light emitting element and the light receiving element protrude.

In the smoke detector described in Patent Literature 1, for example, when a gas containing particles such as steam different from smoke flows into the smoke-sensitive area, the steam may be erroneously detected as smoke due to scattering light scattered by water particles of the steam.

### Citation List

### Patent Literature

Patent Literature 1: JP 2010-40009 A

### Summary of Invention

In view of the foregoing, it is an object of the present disclosure to provide a smoke detection system, a smoke detection method, and a program which are configured to suppress steam from being erroneously detected as smoke.

A smoke detection system according to one aspect of the present disclosure is configured to detect smoke. The smoke detection system includes an estimation unit. The estimation unit is configured to estimate a state of a gas based on a change temperature which is a temporal change of a temperature of the gas.

A smoke detection method according to one aspect of the present disclosure detects smoke. The smoke detection method includes an estimation step. The estimation step includes estimating a state of a gas based on a change temperature which is a temporal change of a temperature of the gas.

A program according to one aspect of the present disclosure is configured to cause a computer system to execute the smoke detection method.

### Brief Description of Drawings

FIG. 1 is a block diagram illustrating an automatic fire alarm system including a smoke detection system according to one embodiment of the present disclosure;
FIG. 2A is a bottom perspective view illustrating the exterior of a smoke detector according to the one embodiment of the present disclosure;
FIG. 2B is a top perspective view illustrating the exterior of the smoke detector;
FIG. 3 is an exploded bottom perspective view illustrating the smoke detector;
FIG. 4 is an exploded top perspective view illustrating the smoke detector;
FIG. 5 is an exploded perspective view illustrating a detection block in the smoke detector; and
FIG. 6 is a view illustrating operation of the smoke detection system.

### Description of Embodiments

The embodiment and variations described below are mere examples of the present disclosure. The present disclosure is not limited to the embodiment and the variations. The present disclosure may be modified variously without departing from the scope of the present disclosure, even if not including the embodiment and variations, according to a design or the like.

### (Embodiment)

### (1) Schema

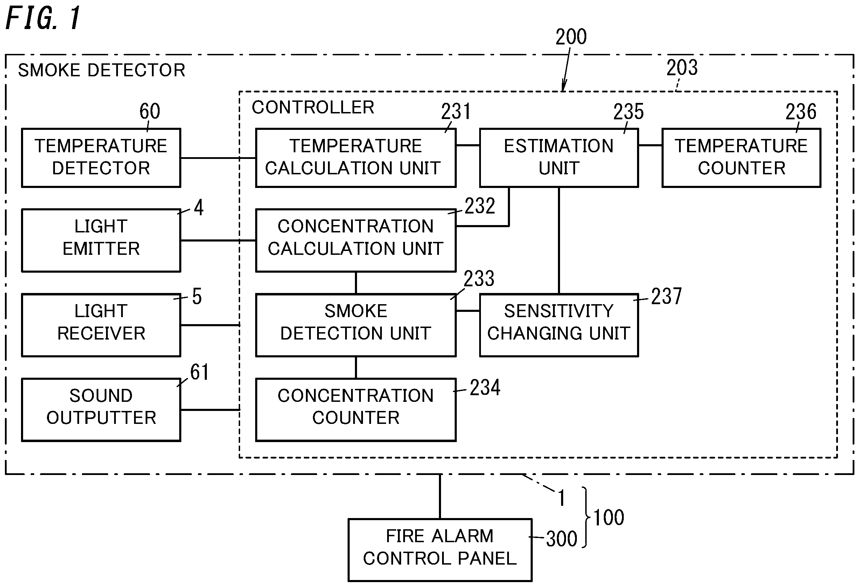

A block diagram of a smoke detection system 200 according to the present embodiment is shown in FIG. 1. The smoke detection system 200 according to the present embodiment is a system configured to detect smoke generated by a fire or the like and is used in an automatic fire alarm system 100. In the present embodiment, the smoke detection system 200 is provided in a smoke detector 1. The smoke detector 1 is a disaster prevention apparatus configured to activate an alarm when the smoke detector 1 detects smoke. That is, when smoke is generated in the event of a disaster such as a fire, the smoke detector 1 senses this smoke and takes the alarm action by, for example, outputting a warning sound or cooperating with another apparatus by a communication function. As used herein, the "disaster prevention apparatus" is an apparatus installed in a facility for the purpose of, for example, preventing disasters such as a fire, preventing the spread of damage caused by disasters, or restoring from disasters.

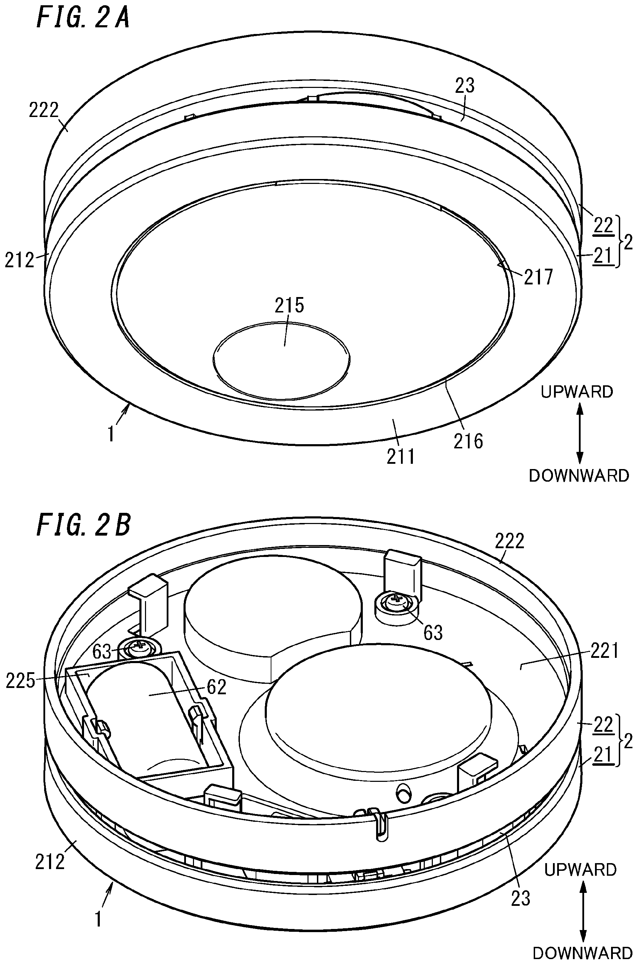

As illustrated in FIGS. 2A and 2B, the smoke detector 1 includes a housing 2 and various components accommodated in the housing 2. The smoke detector 1 is installed and used in a facility. The smoke detector 1 is installed by being attached to, for example, a ceiling or a wall in a room, a corridor, a staircase, or the like in a facility. Examples of the facility include non-residential facilities such as hotels, office buildings, schools, welfare facilities, commercial facilities, theme parks, hospitals, and factories. The facility is not limited to these examples. The smoke detector 1 may be used in a facility such as a multi-dwelling unit or a detached dwelling house.

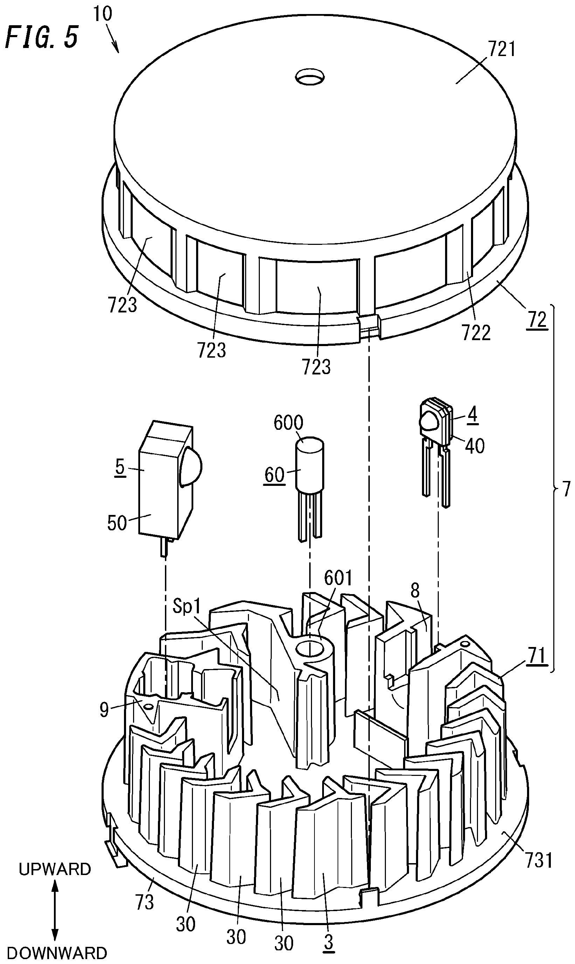

The smoke detector 1 includes a wall structure 3, a light emitter 4, a light receiver 5, and a temperature detector 60 (see FIG. 5). The light emitter 4 includes a light emitting element 40. The light receiver 5 includes a light receiving element 50. The temperature detector 60 includes a temperature detection element 600. The wall structure 3 surrounds a detection space Sp1 when viewed from one direction orthogonal to one plane. The light emitter 4 outputs light toward the detection space Sp1. The light receiver 5 is disposed at a location where direct light from the light emitter 4 is not incident on the light receiving element 5 and scattered light by smoke or the like in the detection space Sp1 is incident on the light receiving element 5. Thus, in a state where no smoke or the like is present in the detection space Sp1, the light receiver 5 does not receive the light output from the light emitter 4, and in a state where smoke is present in the detection space Sp1, the light receiver 5 receives the light (scattered light) which is output from the light emitter 4 and which is scattered by the smoke or the like. Thus, the smoke detector 1 is configured to detect smoke present in the detection space Sp1 based on a light receiving state of the light receiver 5. The temperature detector 60 detects the temperature of a gas in the detection space Sp1.

The present embodiment describes an example in which the smoke detection system 200 (the smoke detector 1) is installed on a ceiling of a hotel room having a bathroom (e.g., a prefabricated bathroom). For example, when a door of the bathroom is opened, air flowing into the hotel room from the bathroom is cooled and may results in steam. The smoke detection system 200 of the present embodiment includes an estimation unit 235 (see FIG. 1). The estimation unit 235 estimates a state of a gas based on a change temperature which is a temporal change of a temperature of the gas. This enables the smoke detection system 200 according to the present embodiment to estimate whether the state of the gas corresponds to smoke (or is a gas containing water droplets (steam)), and therefore, steam is suppressed from being erroneously detected as smoke.

### (2) Configuration

The smoke detector 1 and the smoke detection system 200 of the present embodiment will be described in detail before.

### (2.1) Configuration of Smoke Detector

First, the configuration of the smoke detector 1 will be described with reference to FIGS. 2A to 5.

In the present embodiment, a description is given assuming that the smoke detector 1 is to be attached to a ceiling of a facility. In the description given below, directions perpendicular (orthogonal) to a horizontal plane in a state where the smoke detector 1 is attached to the ceiling are referred to as "upward and downward directions", and a downward direction of the upward and downward directions is referred to as a "downward direction". In the figures, arrows indicating the "upward and downward directions" are shown for the sake of explanation and are not accompanied with entity. However, these directions are not intended to limit the use direction (attachment direction) of the smoke detector 1. For example, the "downward direction" defined here may be a frontward direction (horizontal direction) in an actual installation state of the smoke detector 1.

Moreover, in the drawings described below, the configuration of the smoke detector 1 is schematically represented, and dimensional relationships and the like of components in the drawings may differ from the actual one.

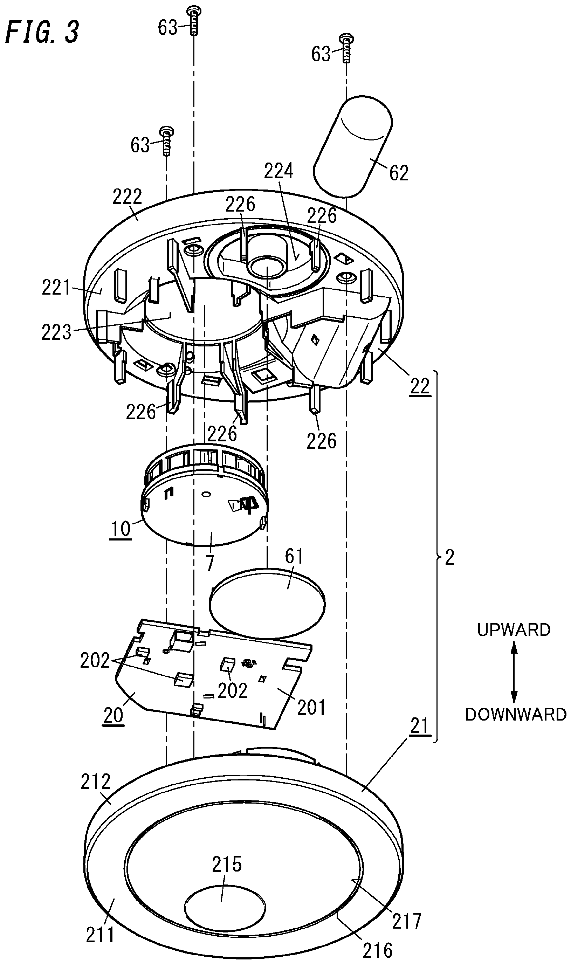

The smoke detector 1 includes the housing 2, a detection block 10 (see FIG. 3), and a circuit block 20 (see FIG. 3). Moreover, in the present embodiment, the smoke detector 1 further includes a sound outputter 61 (see FIG. 3) and a battery 62. The sound outputter 61 and the battery 62 do not have to be essentially included in components of the smoke detector 1, and the components of the smoke detector 1 do not have to include the battery 62 or the sound outputter 61.

The housing 2 is disk-shaped and has a circular shape in plan view. The housing 2 is a molded product made of a synthetic resin. The housing 2 includes a first cover 21 and a second cover 22. The first cover 21 is combined with the second cover 22 to cover a lower surface of the second cover 22. The second cover 22 is fixed to a mounting surface (a ceiling plane in the present embodiment). However, strictly speaking, the second cover 22 is not fixed directly to the mounting surface but is fixed indirectly to the mounting surface by being fixed to an attachment base fixed to the mounting surface.

Here, the first cover 21 and the second cover 22 are both formed in a disk shape and have the same outer periphery shape in plan view. For this reason, one housing 2 which is disk-shaped is formed by combining the first cover 21 and the second cover 22. The first cover 21 is coupled to the second cover 22 with a plurality of (three) screws 63. In a state where the first cover 21 and the second cover 22 are coupled to each other, the detection block 10, the circuit block 20, and the sound outputter 61 are accommodated between the first cover 21 and the second cover 22.

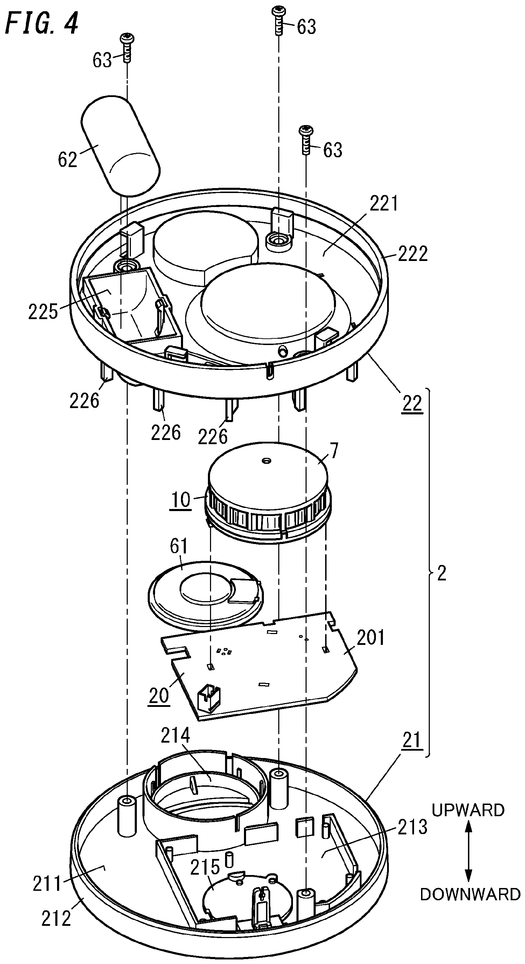

The first cover 21 has a first main board 211 having a circular shape and a first peripheral wall 212 protruding upward from an outer periphery of an upper surface of the first main board 211. The upper surface of the first main board 211 of the first cover 21 further has a circuit area 213 (see FIG. 4) in which the circuit block 20 is to be disposed and a first acoustic area 214 (see FIG. 4) in which the sound outputter 61 is to be disposed. The first cover 21 further includes a push button 215 disposed in the circuit area 213. The push button 215 is configured to be movable about a hinge structure relative to the first main board 211 and allows a pushing operation into an inner side of the housing 2, that is an upward pushing operation. A push operation given to the push button 215 operates a switch included in the circuit block 20 disposed in the circuit area 213.

The first main board 211 has a lower surface in which a groove 216 (see FIG. 2A) extending along an outer peripheral edge of the lower surface is formed. The groove 216 is substantially concentric with the outer peripheral edge of the lower surface of the first main board 211 and is formed over the entire periphery. That is, the groove 216 has an annular shape slightly smaller than the outer peripheral edge of the lower surface of the first main board 211. The groove 216 has a bottom surface having a portion corresponding to the first acoustic area 214, and in the portion, a tone hole 217 (see FIG. 2A) penetrating the first main board 211 in a plate thickness direction of the first main board 211 is formed.

The second cover 22 has a second main board 221 having a circular shape and a second peripheral wall 222 protruding upward from an outer periphery of an upper surface of the second main board 221. Moreover, the second main board 221 of the second cover 22 has a lower surface having an accommodation area 223 (see FIG. 3) in which the detection block 10 is to be disposed and a second acoustic area 224 in which the sound outputter 61 is to be disposed. The upper surface of the second main board 221 of the second cover 22 further has a battery area 225 (see FIG. 4) in which the battery 62 is to be accommodated.

Moreover, the second cover 22 further includes a plurality of spacers 226 protruding downward from the lower surface of the second main board 221. The plurality of spacers 226 secure a prescribed space between the first cover 21 and the second cover 22 with tip ends (lower ends) of the plurality of spacers 226 being in contact with the upper surface of the first main board 211. Specifically, in a state where the first cover 21 and the second cover 22 are coupled to each other, a space as an opening 23 via which the outside of the housing 2 is communicated with an internal space of the housing 2 is formed between an upper end surface of the first peripheral wall 212 and the lower surface of the second main board 221. This allows a gas such as smoke to flow through the opening 23 into the internal space of the housing 2, that is, the space between the first cover 21 and the second cover 22.

Note that the shape of the housing 2 (the first cover 21 and the second cover 22) is not limited to the disk shape but may be, for example, polygon (quadrangle, hexagon, octagon, or the like).

As illustrated in FIG. 5, the detection block 10 includes a detection case 7, the light emitter 4, the light receiver 5, and the temperature detector 60.

The detection case 7 is disk-shaped and has a circular shape in plan view. The detection case 7 is a molded product made of a synthetic resin. The detection case 7 includes a first case 71 and a second case 72. The second case 72 is combined with the first case 71 to cover an upper surface of the first case 71. The first case 71 is fixed to a printed wiring board 201 (see FIG. 3). Here, the detection case 7 has at least a light shielding property. The detection space Sp1 is formed in the detection case 7. The first case 71 has a bottom plate 73 having a circular shape and the wall structure 3 protruding upward from an outer periphery of an upper surface 731 of the bottom plate 73. The wall structure 3 has a function of taking a gas into the detection space Sp1 from the outside of the detection space Sp1 while suppressing light from entering the detection space Sp1 from the outside of the detection space Sp1. The wall structure 3 is formed in a toroidal shape in plan view so as to surround the entire periphery of the detection space Sp1. Specifically, the wall structure 3 is a collection of a plurality of pieces 30 aligned along an outer peripheral edge of the upper surface 731 of the bottom plate 73. The wall structure 3 allows the gas to pass between the plurality of pieces 30. In other words, at the outer periphery of the upper surface 731 of the bottom plate 73, the plurality of pieces 30 are arranged at intervals along the outer peripheral edge of the upper surface 731.

The first case 71 includes a light emitting element holder 8, a light receiving element holder 9, and a temperature detection element holder 601. The light emitting element holder 8 holds the light emitter 4 (light emitting element 40). The light receiving element holder 9 holds the light receiver 5 (light receiving element 50). The temperature detection element holder 601 holds the temperature detector 60 (temperature detection element 600). The light emitting element 40 is, for example, a light-emitting diode (LED) and is configured to output light when energized. The light emitting element 40 outputs light toward the detection space Sp1. The light receiving element 50 is, for example, a photodiode (PD) and is an element configured to perform photoelectric conversion of converting light into an electric signal. The light receiver 5 (light receiving element 50) is disposed at a location where the light receiver 5 (light receiving element 50) is free from incidence of direct light from the light emitter 4 (light emitting element 40) and scattered light scattered by smoke or the like in the detection space (Sp1) is incident on the light receiving element 5. The temperature detection element 600 is, for example, a thermistor, and is an element whose electrical characteristic (resistance value) varies in accordance with temperature. The temperature detector 60 (temperature detection element 600) detects the temperature of the detection space Sp1.

The second case 72 has an upper board 721 having a circular shape and a peripheral wall 722 protruding downward from an outer periphery of a lower surface of the upper board 721. The inner diameter of the peripheral wall 722 is greater than the outer diameter of the wall structure 3. The protrusion amount of the peripheral wall 722 from the lower surface of the upper board 721 is substantially the same as the protrusion amount of the wall structure 3 from the upper surface 731 of the bottom plate 73. Thus, in a state where the first case 71 and the second case 72 are coupled to each other, a tip end surface (a lower end face) of the peripheral wall 722 is in contact with the upper surface 731 of the bottom plate 73, and a tip end surface (an upper end surface) of the wall structure 3 is in contact with the lower surface of the upper board 721. In this state, the wall structure 3 is to be disposed within a space surrounded by the peripheral wall 722.

The peripheral wall 722 has a plurality of window holes 723 penetrating the peripheral wall 722 in a plate thickness direction of the peripheral wall 722. The plurality of window holes 723 are aligned along a peripheral direction of the lower surface of the upper board 721. Thus, the wall structure 3 is exposed to the outside of the detection case 7 through the plurality of window holes 723 in a state where the first case 71 and the second case 72 are coupled to each other. Here, an insect screen may be attached to the peripheral wall 722 so as to cover the plurality of window holes 723. The insect screen reduces the entry of foreign substances, such as insects, from the plurality of window holes 723 into the detection space Sp1 in the detection case 7.

The circuit block 20 includes a printed wiring board 201 and a plurality of electronic components 202 including a switch. The plurality of electronic components 202 are mounted on the printed wiring board 201. The light emitter 4, the light receiver 5, and the temperature detector 60 of the detection block 10 are electrically connected to a conductor section of the printed wiring board 201. The sound outputter 61 and the battery 62 are further electrically connected to the conductor section of the printed wiring board 201. In the present embodiment, the printed wiring board 201 is disposed below the detection block 10, that is, between the detection block 10 and the first main board 211. The detection block 10 is mounted on one surface (upper surface) in a plate thickness direction of the printed wiring board 201.

Here, the circuit block 20 includes a controller 203 (see FIG. 1) which is part of a plurality of electronic components 202. The controller 203 is a circuit for controlling the light emitter 4, the light receiver 5, the sound outputter 61, and the like. The controller 203 has a function as the smoke detection system 200. The controller 203 determines the presence or absence of smoke in the detection space Sp1 based on the quantity of light received by (the magnitude of an output signal from) the light receiver 5. The quantity of light received by the light receiver 5 changes, for example, in accordance with the concentration of particles in a gas in the detection space Sp1. When the concentration of the particles is higher than or equal to a prescribed concentration, the controller 203 determines that smoke is present in the detection space Sp1. When detecting the presence of smoke, the controller 203 outputs an electric signal for driving the sound outputter 61 to the sound outputter 61. The controller 203 (smoke detection system 200) will be described in detail in "(2.2) Configuration of Smoke Detection System".

The sound outputter 61 receives the electric signal from the circuit block 20 and outputs a sound (sonic wave). The sound outputter 61 is realized by, for example, a loudspeaker or a buzzer for converting an electric signal into a sound. The sound outputter 61 is disk-shaped and has a circular shape in plan view.

The battery 62 is accommodated in the battery area 225 above the second cover 22. The battery 62 may be either a primary battery or a secondary battery.

The smoke detector 1 according to the present embodiment having the above-described configuration is included in components of, for example, the automatic fire alarm system 100 (see FIG. 1). The automatic fire alarm system 100 includes the smoke detector 1 and a fire alarm control panel 300. When detecting the occurrence of (smoke generated from) a fire, the smoke detector 1 transmits an alarm activation signal (fire signal) notifying the fire alarm control panel 300 of the occurrence of the fire. A communication means between the smoke detector 1 and the fire alarm control panel 300 may be wired communication or wireless communication. When, for example, receiving the alarm activation signal from the smoke detector 1, the fire alarm control panel 300 transmits a notification signal for notifying a management apparatus of the occurrence of the fire. Moreover, when the automatic fire alarm system 100 includes a plurality of smoke detectors 1, the fire alarm control panel 300 causes, in response to reception of the alarm activation signal from the smoke detector 1, a sound to be output from a sound outputter 61 of another smoke detector 1 in an interlocking manner. Moreover, the automatic fire alarm system 100 may include a transmitter (manual call point, fire alarm pull station) and the like. The transmitter includes a push button to be pushed by a person when the person finds a fire. When the push button is pushed, the transmitter transmits the alarm activation signal (fire signal) to the fire alarm control panel 300.

### (2.2) Configuration of Smoke Detection System

The smoke detection system 200 according to the present embodiment includes the controller 203. Components of the smoke detection system 200 may include the temperature detector 60 for detecting the temperature of the gas in the detection space Sp1. Moreover, the components of the smoke detection system 200 may include the light receiver 4 and the light emitter 5 as a concentration detector for detecting the concentration of particles contained in the gas in the detection space Sp1.

The controller 203 includes, for example, a microcomputer having a processor and memory. That is, the controller 203 is realized by a computer system including a processor and memory. Then, the processor executes an appropriate program to cause the controller 203 to function as a temperature calculation unit 231, a concentration calculation unit 232, a smoke detection unit 233, a concentration counter 234, the estimation unit 235, a temperature counter 236, and a sensitivity changing unit 237. The program may be stored in the memory in advance, provided via a telecommunications network such as the Internet, or provided by a non-transitory storage medium such as a memory card storing the program.

The temperature calculation unit 231 is configured to perform signal processing on an output of the temperature detector 60 to calculate the change temperature (°C). The change temperature is a temporal change of the temperature of the gas in the detection space Sp1. In the present embodiment, the temperature calculation unit 231 calculates the change temperature for each unit time period. That is, the change temperature is a difference between the temperature of the gas in the detection space Sp1 at a starting point of a unit time period and the temperature of the gas in the detection space Sp1 at an end time point of the unit time period. The temperature calculation unit 231 calculates the temperature of the gas in the detection space Sp1 based on the resistance of the temperature detector 60 (thermistor) and calculates the change temperature for each unit time period. The length of the unit time period is preferably set to a length of time longer than a time taken from the start of increasing to stabilizing of the temperature in the detection space Sp1 when a gas containing droplets of water (steam) flows into the detection space Sp1. The length of the unit time period is, for example, 10 seconds but is not limited to this value and may be a different value.

The concentration calculation unit 232 is configured to perform signal processing on an output of the light receiver 5 to calculate the concentration (%/m) of particles contained in the gas in the detection space Sp1. The concentration calculation unit 232 calculates the concentration of the particles contained in the gas in the detection space Sp1 based on the magnitude of the output signal of the light receiver 5, the output signal corresponding to the quantity of light received by the light receiver 5. The concentration calculation unit 232 calculates the concentration at a prescribed sampling period. In the present disclosure, an attenuation rate (%) of light per unit distance (1 m) is calculated as the concentration of the particles, but the concentration of the particles may be another unit such as the number of particles or the weight of particles per unit volume.

The smoke detection unit 233 is configured to sense smoke based on the concentration of the particles contained in the gas. Specifically, the smoke detection unit 233 acquires a calculation result by the concentration calculation unit 232, the calculation result being the concentration of the particles contained in the gas. The smoke detection unit 233 detects smoke based on a comparison result between the concentration (concentration calculated value) of the particles contained in the gas and a concentration threshold. More specifically, when the concentration calculated value is larger than or equal to the concentration threshold, the smoke detection unit 233 increases the value (count value) of the concentration counter 234. Moreover, when the concentration calculated value is smaller than the concentration threshold, the smoke detection unit 233 reduces the value (count value) of the concentration counter 234. The lower limit value of the concentration counter 234 is set to zero. In the present embodiment, the count value of the concentration counter 234 is an integer and is incremented or decremented by a value of "1". When the count value of the concentration counter 234 reaches a prescribed value, the smoke detection unit 233 determines that smoke is present in the detection space Sp1. When detecting the presence of smoke, the smoke detection unit 233 outputs an electric signal for driving the sound outputter 61 to the sound outputter 61. Moreover, the smoke detection unit 233 transmits an alarm activation signal (fire signal) to notify the fire alarm control panel 300 of the occurrence of a fire.

The estimation unit 235 is configured to estimate the state of the gas in the detection space Sp1 based on the change temperature as the calculation result by the temperature calculation unit 231 and the concentration (concentration calculated value) of a calculation result by the concentration calculation unit 232. Specifically, the estimation unit 235 compares the change temperature with the temperature threshold and compares the concentration calculated value with a prescribed concentration value for each unit time period. Then, based on the comparison results, the estimation unit 235 estimates whether the state of the gas corresponds to smoke or is a water droplet-containing state. The "smoke" mentioned herein is a gas generated by a fire and contains particles of, for example, soot. The "water droplet-containing state" is a state of a gas containing water particles (so-called steam) resulting from fluidization of part of water vapor.

The estimation unit 235 estimates whether the state of the gas corresponds to smoke or is the water droplet-containing state based on the value (count value) of the temperature counter 236. When the change temperature is equal to or higher than the temperature threshold and the concentration calculated value is larger than or equal to the prescribed concentration value, the estimation unit 235 increases the value (count value) of the temperature counter 236. That is, the count value of the temperature counter 236 is increased when the concentration of the particles contained in the gas is higher than or equal to the prescribed concentration value and a rising temperature of the gas is higher than or equal to the temperature threshold during the unit time period. In the present embodiment, the count value of the temperature counter 236 is an integer and is incremented by a value of "1". The concentration calculated value to be compared with the prescribed concentration value may be a peak value (a maximum value or a minimum value) of the concentration calculated value in the unit time period or may be a representative value (an average value, a median value, or the like) of the concentration calculated value during the unit time period. In the present embodiment, for example, the largest peak value of the concentration calculated value in the unit time period is compared with the prescribed concentration value. The temperature threshold is, for example, 3 (°C) but is not limited to this value and may be another value. Moreover, the temperature threshold may be changed in accordance with the count value of the temperature counter 236. The prescribed concentration value is a value smaller than the concentration threshold. The prescribed concentration value is, for example, 2 (%/m) but is not limited to this value and may be another value. Moreover, the prescribed concentration value may be changed in accordance with the count value of the temperature counter 236. Moreover, the count value of the temperature counter 236 may be reset to "0" if the concentration of the particles contained in the gas is kept lower than the prescribed concentration for a predetermined time period.

When the count value of the temperature counter 236 changes from "1" to "2", the estimation unit 235 estimates that the state of the gas corresponds to smoke. Specifically, when the count value of the temperature counter 236 changes from "1" to "2", the estimation unit 235 estimates that the state of the gas corresponds to smoke produced from combustion involving the occurrence of a flame. In other words, when the change temperature during a first unit time period (a first time period) is higher than or equal to a temperature threshold (a first temperature threshold) and the change temperature during a second unit time period (a second time period) is higher than or equal to a temperature threshold (a second temperature threshold), the estimation unit 235 estimates that the state of the gas corresponds to smoke of combustion. The second unit time period is a unit time period after the first unit time period in time sequence. That is, the estimation unit 235 estimates that the state of the gas corresponds to smoke of combustion when the temperature of the gas continues increasing in a state where the concentration of the particles contained in the gas is higher than or equal to the prescribed concentration value.

Moreover, when the count value of the temperature counter 236 remains "1" and is unchanged, the estimation unit 235 estimates that the state of the gas is a water droplet (steam)-containing state. In other words, when the change temperature during the first unit time period (the first time period) is higher than or equal to the temperature threshold (the first temperature threshold) and the change temperature during the second unit time period (the second time period) is lower than the temperature threshold (the second temperature threshold), the estimation unit 235 estimates that the state of the gas is the water droplet-containing state. That is, the estimation unit 235 estimates that the state of the gas is the water droplet-containing state when the temperature of the gas increases once and then stabilizes in a state where the concentration of the particles contained in the gas is higher than or equal to the prescribed concentration value.

Moreover, when the count value of the temperature counter 236 remains "0" and is unchanged, the estimation unit 235 estimates that the state of the gas corresponds to smoke. Specifically, when the change temperature is lower than the temperature threshold and the concentration calculated value is larger than or equal to the prescribed concentration value, the estimation unit 235 estimates that the state of the gas corresponds to smoke generated by smoldering without the occurrence of a flame (flameless form of combustion). That is, the estimation unit 235 estimates that the state of the gas corresponds to smoke produced from smoldering when the temperature of the gas does not increase in a state where the concentration of the particles contained in the gas is higher than or equal to the prescribed concentration value.

Here, the second time period (the second unit time period) is at least a time period after the first time period (the first unit time period) and does not have to be directly after the first time period in time sequence. For example, when the estimation unit 235 detects that after the count value of the temperature counter 236 changes from "0" to "1", the count value is "1" once or a plurality of number of times successively, the estimation unit 235 once estimates that the state of the gas is the water droplet-containing state (steam) based on that a sequence of the count value "1". Then, when the count value changes from "1" to "2" after the sequence of the count value "1", the estimation unit 235 updates an estimation result to a result that the state of the gas corresponds to smoke of combustion. That is, the estimation unit 235 estimates that the state of the gas corresponds to smoke of combustion even when the unit time period (the first time period) in which the count value changes from "0" to "1" and the unit time period (the second time period) in which the count value changes from "1" to "2" are not successive in time sequence.

The sensitivity changing unit 237 is configured to update the sensitivity of the smoke detection unit 233 based on the estimation result by the estimation unit 235. In the present embodiment, the sensitivity changing unit 237 reduces the sensitivity of the smoke detection unit 233 when the estimation unit 235 estimates that the state of the gas is the water droplet (steam)-containing state. Specifically, the sensitivity changing unit 237 increases the concentration threshold, with which the smoke detection unit 233 compares the concentration calculated value, from a first threshold as a default value to a second threshold to reduce the sensitivity of the smoke detection unit 233. That is, the sensitivity changing unit 237 reduces the sensitivity of the smoke detection unit 233 when the count value of the temperature counter 236 remains "1" and is unchanged. In other words, a time sequence includes the first unit time period (the first time period) and the second unit time period (the second time period) after the first unit time period. The sensitivity changing unit 237 reduces the sensitivity of the smoke detection unit 233 when the change temperature during the first unit time period is higher than or equal to the temperature threshold (the first temperature threshold) and the change temperature during the second unit time period is lower than the temperature threshold (the second temperature threshold). Moreover, when the estimation unit 235 once estimates that the state of the gas is the water droplet (steam)-containing state and then estimates that the state of the gas corresponds to smoke, the sensitivity changing unit 237 once increases the concentration threshold from the first threshold to the second threshold and then resets the concentration threshold to the first threshold.

Moreover, in the present embodiment, the sensitivity changing unit 237 does not change the sensitivity of the smoke detection unit 233 when the estimation unit 235 determines that the state of the gas corresponds to smoke of combustion or smoldering. That is, when the count value of the temperature counter 236 changes from "1" to "2" or when the count value of the temperature counter 236 remains "0" and is unchanged, the sensitivity changing unit 237 does not increase the concentration threshold from the first threshold to the second threshold. Moreover, when the estimation unit 235 once estimates that the state of the gas corresponds to smoke and then estimates that the state of the gas is the water droplet (steam)-containing state, the sensitivity changing unit 237 keeps the concentration threshold at the first threshold and then increases the concentration threshold to the second threshold.

### (3) Operation Example

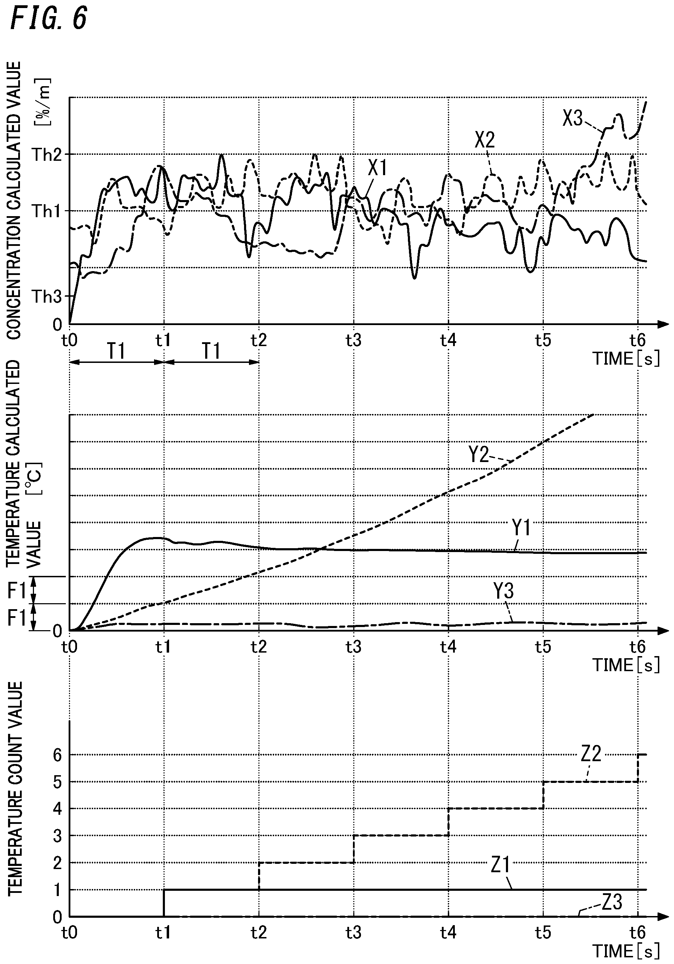

An operation example of the smoke detection system 200 of the present embodiment will be described with reference to FIG. 6. FIG. 6 shows graphs illustrating an example of changes in the concentration calculated value, the temperature calculated value, and the count value (temperature count value) of the temperature counter 236 in a case where the state of the gas is a water droplet (steam)-containing state, a case where the state of the gas corresponds to smoke of combustion, and a case where the state of the gas corresponds to smoke produced from smoldering. The temperature calculated value is the temperature of the detection space Sp1 calculated by the temperature calculation unit 231. The graphs of the temperature calculated value in FIG. 6 show the changes in temperature calculated value, where the temperature calculated value at time point t0 is a reference (0°C).

In the graphs of the temperature calculated value in FIG. 6, X1 (solid line) represents a concentration calculated value when the state of the gas is a water droplet-containing state. X2 (broken line) represents a concentration calculated value when the state of the gas corresponds to smoke of combustion. X3 (long dashed short dashed line) represents a concentration calculated value when the state of the gas corresponds to smoke produced from smoldering. In the graphs of the temperature calculated value in FIG. 6, Y1 (solid line) represents a concentration calculated value when the state of the gas is the water droplet-containing state. Y2 (broken line) represents a temperature calculated value when the state of the gas corresponds to smoke of combustion. Y3 (long dashed short dashed line) represents a temperature calculated value when the state of the gas corresponds to smoke produced from smoldering. In the graphs of the temperature count value in FIG. 6, Z1 (solid line) represents a temperature count value when the state of the gas is a state where droplets of water are contained. Z2 (broken line) represents a temperature count value when the state of the gas corresponds to smoke of combustion. Z3 (long dashed short dashed line) represents a temperature count value when the state of the gas corresponds to smoke produced from smoldering.

Moreover, the values of X1 and Y1 in FIG. 6 are values when the smoke detector 1 is installed at a location apart from a generation source (e.g., door of a bathroom) of the gas containing droplets of water (steam) by 0.5 (m) on a horizontal plane. The values of X2 and Y2 in FIG. 6 are values when the smoke detector 1 is installed at a location apart from a generation source of smoke of combustion by 2.2 (m) on a horizontal plane. The values of X3 and Y3 in FIG. 6 are values when the smoke detector 1 is installed at a location apart from a generation source of smoke produced from smoldering by 2.2 (m) on a horizontal plane.

Moreover, in FIG. 6, Th1 represents a first threshold as a default value of the temperature threshold, Th2 represents a second threshold as the temperature threshold after a change by the sensitivity changing unit 237, and Th3 represents the prescribed concentration value with which the estimation unit 235 compares the concentration calculated value. In FIG. 6, T1 represents a unit time period, and F1 represents a temperature threshold.

First, a case where the state of the gas is the water droplet (steam)-containing state will be described (see X1, Y1, and Z1 in FIG. 6).

For example, when a door of a bathroom is opened and a gas containing droplets of water (steam) flows into the detection space Sp1 of the smoke detector 1, the gas increases the concentration calculated value and the temperature calculated value. During a unit time period T1 (the first unit time period) from the time point t0 to the time point t1, the change temperature is higher than a temperature threshold F1 (the first temperature threshold), and the concentration calculated value is larger than each of the prescribed concentration value Th3 and the first threshold Th1 (the concentration threshold). Thus, at the time point t1, the count value of the temperature counter 236 increases from "0" to "1".

During a unit time period T1 (the second unit time period) from the time point t1 to time point t2, the change temperature is lower than a temperature threshold F1 (the second temperature threshold). This is because, when the state of the gas is the water droplet (steam)-containing state, the temperature of the gas temporarily increases the temperature calculated value, and then, the temperature stabilizes. Thus, at the time point t2, the count value of the temperature counter 236 does not increase but remains "1". Thus, the estimation unit 235 estimates that the state of the gas is the water droplet (steam)-containing state. The sensitivity changing unit 237 changes (increases) the concentration threshold from the first threshold Th1 to the second threshold Th2, thereby reducing the sensitivity of the smoke detection unit 233.

Thus, after the time point t2, the concentration calculated value hardly exceeds the concentration threshold (the second threshold Th2), and therefore, steam is suppressed from being erroneously detected as smoke (erroneous detection is suppressed). In the example shown in FIG. 6, timings at which the concentration calculated value exceeds the concentration threshold (the first threshold Th1) exist before the time point t2, but the concentration calculated value is smaller than the concentration threshold (the second threshold Th2) after the time point t2. Thus, the smoke detection unit 233 determines that smoke is not present in the detection space Sp1.

Next, a case where the state of the gas corresponds to smoke of combustion will be described (see X2, Y2, and Z2 in FIG. 6).

When burning along with a flame occurs, smoke and the flame increase the concentration calculated value and the temperature calculated value. During a unit time period T1 (the first unit time period) from the time point t0 to the time point t1, the change temperature is higher than a temperature threshold F1 (the first temperature threshold), and the concentration calculated value is larger than each of the prescribed concentration value Th3 and the first threshold Th1 (the concentration threshold). Thus, at the time point t1, the count value of the temperature counter 236 increases from "0" to "1".

Also during the unit time period T1 (the second unit time period) from the time point t1 to the time point t2, the change temperature is higher than the temperature threshold F1 (second temperature threshold). This is because the flame of combustion continues increasing the temperature of the gas. Thus, at the time point t2, the count value of the temperature counter 236 increases from "1" to "2". Thus, the estimation unit 235 estimates that the state of the gas corresponds to smoke of combustion. The sensitivity changing unit 237 does not change (keeps) the concentration threshold at the first threshold Th1. That is, the sensitivity changing unit 237 does not change (does not reduce) the sensitivity of the smoke detection unit 233.

Thus, the concentration calculated value more easily exceeds the concentration threshold (the first threshold Th1), and thus, the occurrence of smoke is detectable earlier, which reduces cases where no alarm is activated. In the example shown in FIG. 6, timings at which the concentration calculated value exceed the concentration threshold (the first threshold Th1) exist also after the time point t2. Thus, the smoke detection unit 233 determines that smoke is present in the detection space Sp1. As a result, the sound outputter 61 outputs a sound, and the smoke detector 1 transmits, to the fire alarm control panel 300, an alarm activation signal (fire signal) notifying the fire alarm control panel 300 of the occurrence of a fire.

Next, a case where the state of the gas corresponds to smoke produced from smoldering will be described (see X3, Y3, and Z3 in FIG. 6).

When flameless smoldering occurs, the concentration calculated value increases, but the temperature calculated value does not increase. This is because smoldering generates smoke but generates no flame. Thus, even when the smoldering occurs, the count value of the temperature counter 236 remains "0". Since the concentration calculated value is larger than the prescribed concentration value Th3, the estimation unit 235 estimates that the state of the gas corresponds to smoke produced from smoldering. The sensitivity changing unit 237 does not change (keeps) the concentration threshold at the first threshold Th1. That is, the sensitivity changing unit 237 does not change (does not reduce) the sensitivity of the smoke detection unit 233.

Thus, the concentration calculated value more easily exceeds the concentration threshold (the first threshold Th1), and thus, the occurrence of smoke is detectable earlier, which reduces cases where no alarm is activated. In the example shown in FIG. 6, timings at which the concentration calculated value exceed the concentration threshold (the first threshold Th1) exist also after the time point t2. Thus, the smoke detection unit 233 determines that smoke is present in the detection space Sp1. As a result, the sound outputter 61 outputs a sound, and the smoke detector 1 transmits, to the fire alarm control panel 300, an alarm activation signal (fire signal) notifying the fire alarm control panel 300 of the occurrence of a fire.

Note that the above-described estimation process of the state of the gas by the estimation unit 235 based on the count value of the temperature counter 236 is a mere example. The count value of the temperature counter 236 at least changes differently in accordance with the state of the gas. The count value of the temperature counter 236 changes in accordance with the length of the unit time period, the magnitude of the temperature threshold, or the like even when a time change in temperature is the same. Thus, the estimation process of the state of the gas by the estimation unit 235 based on the count value of the temperature counter 236 is appropriately set in accordance with the length of the unit time period, the magnitude of the temperature threshold, or the like. For example, when the count value of the temperature counter 236 remains "2", the estimation unit 235 may estimate that the state of the gas is the water droplet (steam)-containing state. Moreover, the estimation unit 235 may estimate that the state of the gas corresponds to smoke of combustion when the count value of the temperature counter 236 changes from "2" to "3".

### (4) Variations

The embodiment is a mere example of various embodiments of the present disclosure. Various modifications may be made depending on design and the like as long as the object of the present disclosure is achieved. Variations of the smoke detection system 200 according to the embodiment will be listed below. Note that any of the variations to be described below may be combined as appropriate.

Moreover, functions similar to those of the smoke detection system 200 according to the embodiment may be realized by a smoke detection method, a (computer) program, a non-transitory storage medium storing a program, or the like. The smoke detection method is a method for detecting smoke and includes an estimation step of estimating a state of a gas based on a change temperature which is a temporal change of a temperature of the gas. Moreover, the program is configured to cause a computer system to execute the smoke detection method.

The smoke detection system 200 of the present disclosure includes a computer system in, for example, a controller 203. In that case, the computer system may include, as principal hardware components, a processor and a memory. The processor executes a program stored in the memory of the computer system, thereby realizing functions the smoke detection unit 233, the estimation unit 235, the sensitivity changing unit 237, and the like. The program may be stored in the memory of the computer system in advance, provided via telecommunications network, or provided as a non-transitory recording medium such as a computer system-readable memory card, optical disc, or hard disk drive storing the program. The processor of the computer system may be made up of a single or a plurality of electronic circuits including a semiconductor integrated circuit (IC) or a largescale integrated circuit (LSI). Those electronic circuits may be either integrated together on a single chip or distributed on a plurality of chips, whichever is appropriate. Those plurality of chips may be integrated together in a single device or distributed in multiple devices without limitation. The smoke detection system 200 is accommodated in a single housing (in the present disclosure, the housing 2), but this should not be construed as limiting. The smoke detection system 200 may be distributed in a plurality of housings. For example, a function as the smoke detection system 200 may be distributed in the smoke detector 1 and the fire alarm control panel 300, or the fire alarm control panel 300 may have the function as the smoke detection system 200. Moreover, the function as the smoke detection system 200 may be realized by cloud (cloud computing).

### (4.1) First Variation

In the above-described embodiment, when the estimation unit 235 estimates that the state of the gas is a water droplet (steam)-containing state, the sensitivity changing unit 237 increases the concentration threshold from the first threshold Th1 to the second threshold Th2 to reduce the sensitivity of the smoke detection unit 233, but this should not be construed as limiting. The sensitivity changing unit 237 may increase the sensitivity of the smoke detection unit 233 when the estimation unit 235 estimates that the state of the gas corresponds to smoke of combustion or smoldering.

In the present variation, a default value of the concentration value with which the smoke detection unit 233 compares the concentration calculated value is the second threshold Th2 (> the first threshold Th1). The sensitivity changing unit 237 reduces the concentration threshold from the second threshold Th2 as the default value to the first threshold Th1, thereby increasing the sensitivity of the smoke detection unit 233.

The sensitivity changing unit 237 increases the sensitivity of the smoke detection unit 233 when the count value of the temperature counter 236 changes from "1" to "2". In other words, a time sequence includes the first unit time period (the first time period) and the second unit time period (the second time period) after the first unit time period. The sensitivity changing unit 237 increases the sensitivity of the smoke detection unit 233 when the change temperature during the first unit time period is higher than or equal to the temperature threshold (the first temperature threshold) and the change temperature during the second unit time period is higher than or equal to the temperature threshold (second temperature threshold).

Moreover, the sensitivity changing unit 237 increases the sensitivity of the smoke detection unit 233 when the change temperature is lower than the temperature threshold and the concentration calculated value is larger than or equal to the prescribed concentration value Th3.

Thus, when smoke is produced from combustion or smoldering, the concentration calculated value more easily exceeds the concentration threshold (the first threshold Th1), and thus, the occurrence of smoke is detectable earlier, which reduces cases where no alarm is activated. Moreover, when the state of the gas estimated by the estimation unit 235 is a water droplet-containing state, the concentration threshold remains the second threshold (Th2) as the default value. Thus, the concentration calculated value hardly exceeds the concentration threshold (the second threshold Th2), and thus, steam is suppressed from being erroneously detected as smoke.

### (4.2) Second Variation

In the above-described embodiment, the smoke detection unit 233 detects smoke based on the concentration calculated value, but this should not be construed as limiting. The smoke detection unit 233 may be configured to detect smoke based on both the concentration calculated value and the change temperature in accordance with the estimation result by the estimation unit 235.

In the present variation, when the estimation unit 235 estimates that the state of the gas corresponds to smoke of combustion or steam, the smoke detection unit 233 detects smoke based on both the concentration calculated value and the change temperature. In other words, the smoke detection unit 233 detects smoke based on both the concentration (concentration calculated value) of particles contained in the gas and the change temperature when the change temperature during the first unit time period (the first time period) is higher than or equal to the temperature threshold (first temperature threshold). Specifically, the smoke detection unit 233 determines the presence or absence of smoke based on results of a comparison between the concentration calculated value and the concentration threshold and a comparison between the change temperature and the prescribed threshold. For example, when the concentration calculated value is larger than or equal to the concentration threshold and the change temperature is higher than or equal to the prescribed threshold, the smoke detection unit 233 increases the concentration counter 234. When the count value of the concentration counter 234 reaches a prescribed value, the smoke detection unit 233 determines that smoke is present in the detection space Sp1

Thus, when the change temperature is lower than the prescribed threshold, the concentration counter 234 does not increase, and thus, stem is suppressed from being erroneously detected as smoke.

### (4.3) Other Variations

In the above-described embodiment, the estimation unit 235 is configured to estimate the state of the gas based on the concentration calculated value and the change temperature, but this should not be construed as limiting. The estimation unit 235 may estimate the state of the gas based on only the change temperature. The estimation unit 235 compares the change temperature with the temperature threshold, and when the change temperature is higher than the temperature threshold, the estimation unit 235 increases the count value of the temperature counter 236. The estimation unit 235 estimates that the state of the gas corresponds to smoke of combustion when the count value of the temperature counter 236 changes from "1" to "2". Moreover, when the count value of the temperature counter 236 remains "1", the estimation unit 235 estimates that the state of the gas is a water droplet (steam)-containing state. Moreover, when the count value of the temperature counter 236 remains "0", the estimation unit 235 estimates that the state of the gas corresponds to smoke produced from smoldering.

Moreover, in the above-described embodiment, the sensitivity changing unit 237 changes the concentration threshold to change the sensitivity of the smoke detection unit 233, but this should not be construed as limiting. For example, the sensitivity changing unit 237 may multiply the concentration calculated value, with which the smoke detection unit 233 compares the concentration threshold, by a coefficient based on the estimation result by the estimation unit 235 to change the sensitivity of the smoke detection unit 233.

### (Summary)

A smoke detection system (200) of a first aspect is configured to detect smoke. The smoke detection system (200) includes an estimation unit (235). The estimation unit (235) is configured to estimate a state of a gas based on a change temperature which is a temporal change of a temperature of the gas.

This aspect enables estimation of whether the state of the gas corresponds to smoke (or is a water droplet-containing state), and thus, steam is suppressed from being erroneously detected as smoke.

A smoke detection system (200) of a second aspect referring to the first aspect further includes a smoke detection unit (233) and a sensitivity changing unit (237). The smoke detection unit (233) is configured to detect smoke based on a concentration of particles contained in the gas. The sensitivity changing unit (237) is configured to change sensitivity of the smoke detection unit (233) based on an estimation result by the estimation unit (235).

This aspect enables the sensitivity of the smoke detection unit (233) to be changed in accordance with the estimation result by the estimation unit (235), and thus steam is further suppressed from being erroneously detected as smoke.

In a smoke detection system (200) of a third aspect referring to the second aspect, the smoke detection unit (233) is configured to detect the smoke based on a result of a comparison between the concentration of the particles contained in the gas and a concentration threshold. The sensitivity changing unit (237) is configured to change the concentration threshold to change the sensitivity of the smoke detection unit (233).

This aspect enables the sensitivity of the smoke detection unit (233) to be easily changed.

In a smoke detection system (200) of a fourth aspect referring to the second or third aspect, a time sequence includes a first time period (first unit time period) and a second time period (second unit time period) after the first time period. The sensitivity changing unit (237) is configured to reduce the sensitivity of the smoke detection unit (233) when a change temperature during the first time period is higher than or equal to a first temperature threshold and a change temperature during a second time period is lower than a second temperature threshold.

With this aspect, when the state of the gas is the water droplet-containing state, the sensitivity of the smoke detection unit (233) is reduced, steam is suppressed from being erroneously detected as smoke.

In a smoke detection system (200) of a fifth aspect referring to the second or third aspect, a time sequence includes a first time period (first unit time period) and a second time period (second unit time period) after the first time period. The sensitivity changing unit (237) is configured to increase the sensitivity of the smoke detection unit (233) when a change temperature during the first time period is higher than or equal to a first temperature threshold and a change temperature during the second time period is higher than or equal to a second temperature threshold.

With this aspect, when the state of the gas corresponds to smoke, the sensitivity of the smoke detection unit (233) is increased, which enables the smoke to be detected earlier and reduces cases where no alarm is activated.

In a smoke detection system (200) of a sixth aspect referring to the fourth or fifth aspect, the smoke detection unit (233) is configured to detect the smoke based on both the concentration of the particles contained in the gas and the change temperature when the change temperature during the first time period is higher than or equal to the first temperature threshold.

With this aspect, the presence or absence of smoke is determined based on not only the concentration of the particles contained in the gas but also the change temperature, and therefore, the detection accuracy of the smoke is improved.

In a smoke detection system (200) of a seventh aspect referring to any one of the first to sixth aspects, the estimation unit (235) is configured to estimate the state of the gas based on the change temperature and a concentration of particles contained in the gas.

This aspect enables the estimation accuracy of the state of the gas by the estimation unit (235) to be improved.

A smoke detection method of an eighth aspect is a method for detecting smoke and includes an estimation step. The estimation step includes estimating a state of a gas based on a change temperature which is a temporal change of a temperature of the gas.

This aspect enables estimation of whether the state of the gas corresponds to smoke (or is the water droplet-containing state), and thus, steam is suppressed from being erroneously detected as smoke.

A program according to a ninth aspect is configured to cause a computer system to execute the smoke detection method of the eighth aspect.

This aspect enables estimation of whether the state of the gas corresponds to smoke (or is the water droplet-containing state), and thus, steam is suppressed from being erroneously detected as smoke.

### Reference Signs List

- 200: SMOKE DETECTION SYSTEM
- 233: SMOKE DETECTION UNIT
- 235: ESTIMATION UNIT
- 237: SENSITIVITY CHANGING UNIT

## Claims

1. A smoke detection system for detecting smoke, the smoke detection system comprising an estimation unit configured to estimate a state of a gas based on a change temperature which is a temporal change of a temperature of the gas.

2. The smoke detection system of claim 1, further comprising:
a smoke detection unit configured to detect the smoke based on a concentration of particles contained in the gas; and
a sensitivity changing unit configured to change sensitivity of the smoke detection unit based on an estimation result by the estimation unit.

3. The smoke detection system of claim 2, wherein
the smoke detection unit is configured to detect the smoke based on a result of a comparison between the concentration of the particles contained in the gas and a concentration threshold, and
the sensitivity changing unit is configured to change the concentration threshold to change the sensitivity of the smoke detection unit.

4. The smoke detection system of claim 2 or 3, wherein
a time sequence includes a first time period and a second time period after the first time period, and
the sensitivity changing unit is configured to reduce the sensitivity of the smoke detection unit when a change temperature during the first time period is higher than or equal to a first temperature threshold and a change temperature during a second time period is lower than a second temperature threshold.

5. The smoke detection system of claim 2 or 3, wherein
a time sequence includes a first time period and a second time period after the first time period, and
the sensitivity changing unit is configured to increase the sensitivity of the smoke detection unit when a change temperature during the first time period is higher than or equal to a first temperature threshold and a change temperature during the second time period is higher than or equal to a second temperature threshold.

6. The smoke detection system of claim 4 or 5, wherein
the smoke detection unit is configured to detect the smoke based on both the concentration of the particles contained in the gas and the change temperature when the change temperature during the first time period is higher than or equal to the first temperature threshold.

7. The smoke detection system of any one of claims 1 to 6, wherein
the estimation unit is configured to estimate the state of the gas based on the change temperature and a concentration of particles contained in the gas.

8. A smoke detection method for detecting smoke, the smoke detection method comprising an estimation step of estimating a state of a gas based on a change temperature which is a temporal change of a temperature of the gas.

9. A program configured to cause a computer system to execute the smoke detection method of claim 8.
